# EUROPÄISCHE PATENTANMELDUNG

(11) **EP 2 128 869 A1**
(43) Veröffentlichungstag der Anmeldung: **02.12.2009**
(21) Anmeldenummer: 09157739.5
(22) Anmeldetag: 09.04.2009
(51) Int. Cl.: G11B 33/04

(54) **System zur Aufnahme eines steckbaren Datenspeichers**

(30) Priorität: 26.05.2008 DE 202008007082 U
(71) Anmelder: Roy und Jani GbR, OT Gernlinden-Ost 82216 Maisach (DE)
(72) Erfinder: Jani, Rolf, 81245 München (DE); Roy, Joachim, 85250 Altomünster (DE)
(74) Vertreter: Beder, Jens

(57) **Zusammenfassung**

Die Erfindung betrifft ein System zur Aufnahme zumindest eines steckbaren Datenspeichers (14) mit zumindest einem Steckelement (15). Das System umfasst zumindest ein Aufnahmeelement (12) zur Aufnahme des Steckelements (15) und zumindest ein Haltelement (9, 9') zur Halterung des Aufnahmeelements (12). Das System ist in ein offenes und in ein geschlossenes CD- bzw. DVD-Gehäuse (1) aufnehmbar.

## Beschreibung

Die Erfindung betrifft ein System zur Aufnahme zumindest eines steckbaren Datenspeichers mit den Merkmalen des Anspruchs 1.

Es ist bekannt verschiedene mobile Datenträger zum Speichern und/oder Auslesen verschiedenster Daten zu verwenden. Auch ist es bekannt für die verschiedenen mobilen Datenträger verschiedene Aufbewahrungselemente, wie z.B. Gehäuse, Hüllen, Taschen oder ähnliches, zu verwenden. Die verschiedenen Aufbewahrungselemente haben dabei verschiedene Größen und Formen, welche den Datenträgern und eventuellen weiteren Kriterien, wie z.B. Datenart oder Verpackungsdesign, angepasst sind. In der Unterhaltungsindustrie ist die CD bzw. DVD als Datenträger weit verbreitet. Ebenfalls weit verbreitet sind die dazugehörigen CD- bzw. DVD-Gehäuse mit etablierten Formaten. Die Formate erlauben nicht nur die Aufnahme der angegebenen Datenträger, sondern zudem auch die Aufnahme von weiteren Objekten, wie z.B. Booklets. Die etablierten Formate haben den Vorteil zwar kompakt aber dennoch hinreichend groß zu sein. Dadurch besteht kein Miniaturisierungszwang bei Objekten, deren Verkleinerung unerwünscht ist. Eine weitere Verkleinerung von Booklets z.B. könnte dem künstlerischen Aspekt oder z.B. der Lesbarkeit von Inhalten schaden. Eine Verkleinerung der Aufbewahrungselemente würde eine Verkleinerung der Booklets erzwingen und zudem zu leicht zu verlierenden und unvorteilhaft präsentierbaren Aufbewahrungselementen führen.

Der Erfindung liegt daher die Aufgabe zugrunde, ein System zur Aufnahme steckbarer Datenspeicher bzw. -träger kleineren Formats zu schaffen, durch das die steckbaren Datenspeicher stabil, greifbar, einfach entnehmbar und wieder aufnehmbar in ein CD- bzw. DVD-Gehäuse aufgenommen werden können.

Die Aufgabe wird durch das erfindungsgemäße System zur Aufnahme eines steckbaren Datenspeichers mit den Merkmalen des Anspruchs 1 gelöst.

Das erfindungsgemäße System zur Aufnahme zumindest eines steckbaren Datenspeichers mit zumindest einem Steckelement umfasst zumindest ein Aufnahmeelement zur Aufnahme des Steckelements und zumindest ein Haltelement zur Halterung des Aufnahmeelements. Das Aufnahmeelement und das Haltelement können dabei bewegbar miteinander verbunden sein. Das erfindungsgemäße System ist in ein CD- bzw. DVD-Gehäuse aufnehmbar. Das Halteelement und das Aufnahmeelement weisen jeweils miteinander kompatible Geometrien auf, welche es zudem erlauben, den Datenspeicher so aufzunehmen, dass auch das erweiterte System mit dem erfindungsgemäßen System und dem aufgenommenen Datenspeicher in ein CD- bzw. DVD-Gehäuse aufnehmbar ist. Das erweiterte System passt somit in ein geschlossenes CD- bzw. DVD-Gehäuse.

In den Unteransprüchen sind vorteilhafte Ausführungsformen des erfindungsgemäßen Systems zur Aufnahme eines steckbaren Datenspeichers dargestellt.

Vorzugsweise weist das Halteelement zumindest eine erste Ausnehmung auf, welche eine einfache und stabile Aufnahme des Datenspeichers erlaubt. Dadurch ist sichergestellt, dass der Datenspeicher einfach in das erfindungsgemäße System aufgenommen und aus diesem wieder entnommen bzw. herausgenommen werden kann. Zudem wird dadurch unterstützt, dass das erweiterte System mit dem erfindungsgemäßen System und dem aufgenommenen Datenspeicher in ein CD- bzw. DVD-Gehäuse aufnehmbar ist.

Besonders bevorzugt weist das Halteelement zumindest eine zweite Ausnehmung auf, welche mit der ersten Ausnehmung verbunden ist und eine einfache Greifbarkeit des Datenspeichers erlaubt. Dadurch ist es vereinfacht, den Datenspeicher zügig in das erfindungsgemäße System aufzunehmen bzw. aus diesem wieder zu entnehmen.

In einer vorteilhaften Ausführungsform ist das Aufnahmeelement in dem Halteelement verschiebbar gelagert. Durch das Verschieben des Aufnahmeelements wird auch der Datenspeicher verschoben. Eine geeignete Führung des Datenspeichers innerhalb einer in dem Halteelement ausgebildeten Struktur durch das Verschieben des Aufnahmeelements erlaubt eine vorteilhafte Positionierung bzw. Orientierung des Datenspeichers. Dadurch kann durch das Verschieben des Aufnahmeelements der Datenspeicher in eine Position gebracht werden, die eine einfache Aufnahme bzw. Entnahme des Datenspeichers in das Aufnahmeelement bzw. aus diesem erlaubt. Durch das Verschieben des Aufnahmeelements kann das erweiterte System in eine besonders günstige Konstellation gebracht werden, welche sicherstellt, dass das erweiterte System in ein CD- bzw. DVD-Gehäuse aufnehmbar ist.

In einer weiteren vorteilhaften Ausführungsform ist das Aufnahmeelement in dem Halteelement drehbar oder schwenkbar gelagert. Auch durch das Drehen oder Schwenken des Aufnahmeelements ist der Datenspeicher vorteilhaft positionierbar bzw. orientierbar. Durch das Drehen und/oder Schwenken des Aufnahmeelements kann der Datenspeicher beispielsweise in eine Position gebracht werden, die die Aufnahme bzw. Entnahme des Datenspeichers in das Aufnahmeelement bzw. aus diesem erlaubt und vereinfacht. Ein Verschieben oder Verschwenken des Aufnahmeelements erlaubt aber auch das erweiterte System in eine Konstellation zu bringen, in der das erweiterte System einwandfrei in ein CD- bzw. DVD-Gehäuse aufnehmbar ist.

Bevorzugt ist das Aufnahmeelement aus dem Halteelement aussteckbar bzw. herausnehmbar und in das Halteelement wieder einsteckbar bzw. aufnehmbar. Dadurch können je nach Bedarf das Aufnahmeelement oder das Halteelement ausgetauscht werden, ohne das gesamte System austauschen zu müssen.

Besonders bevorzugt ist das Aufnahmeelement als Kappe zur Aufnahme eines USB-Sticks ausgebildet. Somit können insbesondere USB-Sticks als Datenspeicher verwendet werden.

Ein bevorzugtes Ausführungsbeispiel des erfindungsgemäßen Systems zur Aufnahme eines steckbaren Datenspeichers ist in der Zeichnung dargestellt und wird in der nachfolgenden Beschreibung detailliert erläutert. Es zeigen:
- Fig. 1: ein aus dem Stand der Technik bekanntes CD- bzw. DVD-Gehäuse;
- Fig. 2: ein aus dem Stand der Technik bekanntes CD- bzw. DVD-Clip-Tray;
- Fig. 3: ein erfindungsgemäßes erstes Halteelement mit verbundenem und schwenkbarem Aufnahmeelement;
- Fig. 4: ein erfindungsgemäßes erstes Halteelement mit verbundenem und schwenkbarem Aufnahmeelement und aufgenommenem steckbaren Datenspeicher in erster Konstellation;
- Fig. 5: ein erfindungsgemäßes erstes Halteelement mit verbundenem und schwenkbarem Aufnahmeelement und aufgenommenem steckbaren Datenspeicher in zweiter Konstellation;
- Fig. 6: ein erfindungsgemäßes zweites Halteelement mit verbundenem und verschiebbarem Aufnahmeelement.
- Fig. 7: einen Schnitt durch ein erfindungsgemäßes erstes Halteelement;
- Fig. 8: einen Schnitt durch ein erfindungsgemäßes erstes Halteelement mit verbundenem und schwenkbarem Aufnahmeelement;
- Fig. 9: einen Schnitt durch ein erfindungsgemäßes zweites Halteelement;
- Fig. 10: einen Schnitt durch ein erfindungsgemäßes zweites Halteelement mit verbundenem, verschiebbarem und schwenkbarem Aufnahmeelement;
- Fig. 11: eine perspektivische Ansicht eines alternativen Aufnahmeelements;
- Fig. 12: eine perspektivische Ansicht eines alternativen Aufnahmeelements mit beweglichem Befestigungselement.

Sich entsprechende Elemente sind in den Figuren mit sich entsprechenden Bezugszeichen versehen.

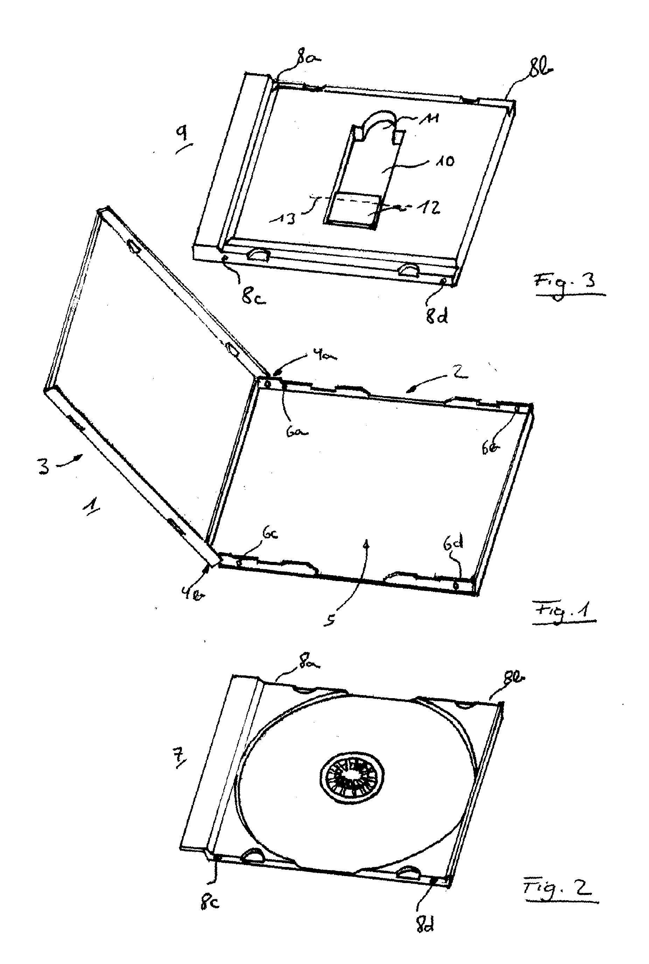

Die Fig. 1 zeigt ein offenes, aus dem Stand der Technik bekanntes CD- bzw. DVD-Gehäuse 1. Im Zusammenhang mit der Erfindung verwendbare CD-Gehäuse umfassen das dem Fachmann bekannte "Jewelcase", das "Digipack" und das "Super Jewel Case". Die Erfindung ist jedoch nicht auf diese CD-Gehäuse beschränkt. Die gezeigte CD-Hülle 1 kann einen Gehäuse-Hauptkörper 2 und einen Gehäuse-Deckel 3 aufweisen. In diesem Fall sind der Gehäuse-Hauptkörper 2 und der Gehäuse-Deckel 3 über die erste Verbindungsstelle 4a und die zweite Verbindungsstelle 4b bewegbar miteinander verbunden. Der Gehäuse-Hauptkörper 2 bildet ein Gehäuse-Volumen 5, z.B. zur Aufnahme eines in der Fig. 2 abgebildeten CD- bzw. DVD-Clip-Trays 7, aus. Zur Befestigung des CD-Clip-Trays 7 an den Gehäuse-Hauptkörper 2 in dem Gehäuse-Volumen 5 ist sind in dem Gehäuse-Hauptkörper 2 Steckausnehmungen 6a - 6d ausgebildet.

Das in der Fig. 2 dargestellte CD-Clip-Tray 7 weist zur Befestigung mit dem Gehäuse-Hauptkörper 2 Steckwölbungen 8a - 8d aus, welche komplementär zu den Steckausnehmungen 6a - 6d des Gehäuse-Hauptkörpers 2 ausgebildet und positioniert sind.

In der Fig. 3 ist ein erfindungsgemäßes erstes Haltelelement 9 dargestellt, welches ebenfalls zur Befestigung mit dem Gehäuse-Hauptkörper 2 Steckwölbungen 8a - 8d ausbildet, welche komplementär zu den Steckausnehmungen 6a - 6d des Gehäuse-Hauptkörpers 2 ausgebildet und positioniert sind. Das erste Haltelelement 9 bildet zudem eine erste Ausnehmung 10 und eine damit verbundene zweite Ausnehmung 11 aus. In der ersten Ausnehmung 10 ist ein Aufnahmeelement 12 zur Aufnahme eines Steckelements eines steckbaren Datenspeichers angeordnet.

In einer möglichen Ausführungsform ist das Aufnahmelement mit dem ersten Haltelement 9 verbunden, vorzugsweise bewegbar. Das Aufnahmeelement 12 ist in diesem Fall um eine Schwenkachse 13 drehbar bzw. schwenkbar.

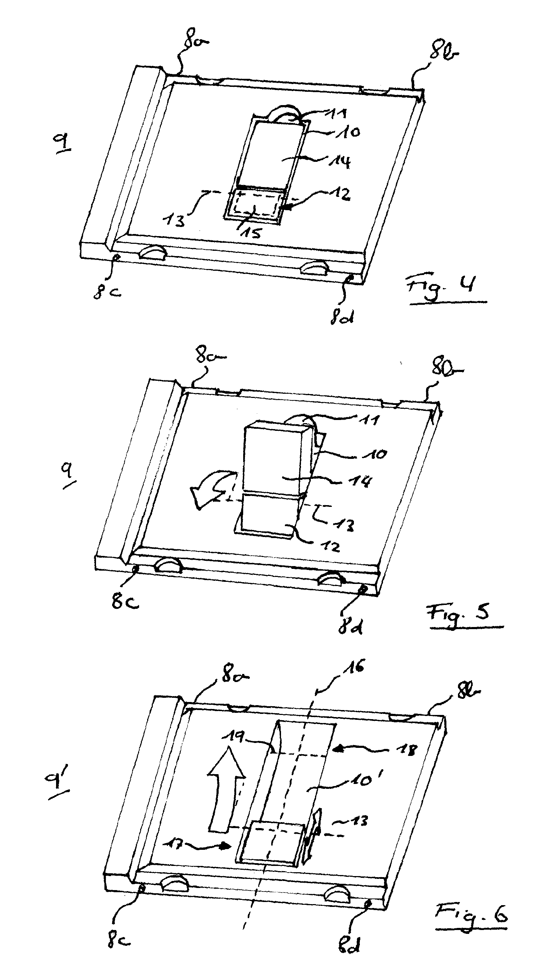

Fig. 4 zeigt erneut das in Fig. 3 dargestellte erste Halteelement 9. In der ersten Ausnehmung 10 ist jedoch nicht nur das Aufnahmeelement 12 sondern auch ein steckbarer Datenspeicher 14 angeordnet. Der steckbare Datenspeicher 14 weist ein Steckelement 15 auf, welcher in der Fig. 4 durch eine gestrichelte Umrandung lediglich angedeutet ist und welches zur Übertragung von beispielsweise Archivdaten in ein Abspielgerät einsteckbar ist. Das Steckelement 15 des steckbaren Datenspeichers 12 ist in dem Aufnahmeelement 12 aufgenommen. Somit ist der Datenspeicher 14 in dem Aufnahmeelement 12 reversibel befestigt angeordnet.

Durch Druckausübung auf dem der Drehachse 13 abgewandten Bereich des Aufnahmenelements 12 und/oder durch Er- bzw. Hintergreifung des Datenspeichers 14 über die zweite Ausnehmung 11 wird das Aufnahmenelement 12, wie in Fig. 5 dargestellt, verschwenkt und der der Drehachse 13 abgewandte Bereich des Datenspeichers 14 aus der ersten Ausnehmung 10 gehoben. Der Datenspeicher 12 kann in dieser Orientierung des Aufnahmeelements 12 aus diesem reversibel entnommen bzw. in dieses wieder reversibel aufgenommen bzw. gesteckt werden.

Ein alternatives erfindungsgemäßes zweites Haltelement 9' ist in der Fig. 6 dargestellt. Das zweite Halteelement 9' unterscheidet sich vom ersten Halteelement 9 dadurch, dass anstelle der ersten Ausnehmung 10 und der zweiten Ausnehmung 11 eine alternative Ausnehmung 10' ausgebildet ist. In der alternativen Ausnehmung 10' ist das Aufnahmeelement 12 an einem unteren Ende 17 der alternativen Ausnehmung 10' angeordnet und sowohl um die Schwenkachse 13 schwenkbar als auch entlang der Längsachse 16 der alternativen Ausnehmung 10' verschiebbar. Dazu ist die Schwenkachse 13 entlang der Längsachse 16 der alternativen Ausnehmung 10' verschiebbar. Die Tiefe der alternativen Ausnehmung 10' variiert entlang der Längsachse 16 und nimmt von dem unteren Ende 17 ausgehend in Richtung eines oberen Endes 18 der alternativen Ausnehmung 10' ab einer bestimmten Höhe 19 kontinuierlich ab. Befindet sich das Aufnahmeelement 12 in der dargestellten Position und ist der Datenspeicher 14 analog zu Fig. 4 in das Aufnahmeelement 12 gesteckt, so liegt es, wie in Fig. 4, flach in der alternativen Ausnehmung 10'. Beim Verschieben des Aufnahmeelements 12 und somit auch des Datenspeichers 14 in Richtung des obere Endes 18 wird der Datenspeicher 14 durch die Führung über das obere Ende 18 angehoben und in eine zu der in Fig. 5 dargestellten Orientierung analoge Orientierung angehoben. Der Datenspeicher 14 ist in dieser Orientierung einfach und reversibel aus dem Aufnahmeelement 12 entnehmbar. Das Aufnahmeelement 12 ist dabei wie zu Fig. 4 erläutert um die Drehachse 13 schwenkbar.

Analog zur Fig. 5 kann auch in dem in der Fig. 6 dargestellten alternativen erfindungsgemäßen System durch Druckausübung auf dem der Drehachse 13 abgewandten Bereich des Aufnahmenelements 12 das Aufnahmenelement 12 verschwenkt werden. Dadurch ist der Datenspeicher 14 leicht in das Aufnahmenelements 12 aufnehmbar bzw. steckbar.

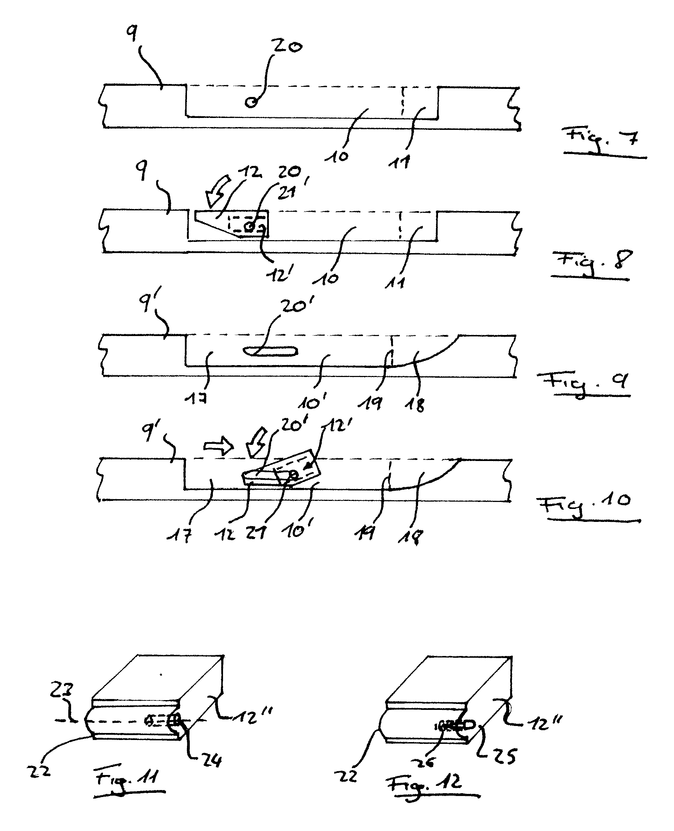

Fig. 7 zeigt einen Schnitt durch das erfindungsgemäße erste Haltelement 9. Es sind deutlich die erste Ausnehmung 10 und die damit verbundene zweite Ausnehmung 11 zu erkennen. In der ersten Ausnehmung 10 sind zur Aufnahme bzw. Befestigung des Aufnahmenelements 12 in dem ersten Halteelement 9 gegenüberliegende Befestigungsausnehmungen 20 seitlich ausgebildet.

Fig. 8 zeigt einen weiteren Schnitt durch das erfindungsgemäße erste Haltelement 9. In der ersten Ausnehmung 10 ist das Aufnahmenelement 12 in seiner Grundposition aufgenommen. An dem Aufnahmenelement 12 sind gegenüberliegende Befestigungselemente 21 seitlich ausgebildet. Die Befestigungselemente 21 sind komplementär zu den Befestigungsausnehmungen 20 ausgebildet. Die Befestigungsausnehmungen 20 und die Befestigungselemente 21 liegen jeweils auf der Schwenkachse 13 (siehe Fig. 5) und wirken zu einer Schwenklagerung zusammen. Das Aufnahmenelement 12 ist in der ersten Ausnehmung 10 um die Schwenkachse 13 schwenkbar gelagert. In dem Aufnahmeelement 12 ist durch Striche eine Aufnahmeausnehmung 12' angedeutet, innerhalb derer das Steckelement des steckbaren Datenspeichers 14 aufgenommen und/oder reversibel befestigt werden kann.

Fig. 9 zeigt einen Schnitt durch das erfindungsgemäße zweite Haltelement 9'. In der alternativen ersten Ausnehmung 10', welche sich an der bestimmten Höhe 19 in ein unteres Ende 17 und ein oberes Ende 18 aufteilt, sind zur Aufnahme bzw. Führung des Aufnahmenelements 12 in dem alternativen ersten Halteelement 9' gegenüberliegende alternative Befestigungsausnehmungen 20' seitlich ausgebildet. Die dargestellten alternativen Befestigungsausnehmungen 20' sind länglich und parallel zur Längsachse 16 ausgebildet. Die alternativen Befestigungsausnehmungen 20' wirken mit den Befestigungselementen 21 zu einer Führung des Aufnahmenelements 12 zusammen in der das Aufnahmenelement 12 zudem schwenkbar gelagert ist. Die Befestigungselemente 21 liegen auf der Schwenkachse 13, welche wiederum senkrecht zur Längsachse 16 orientiert ist und parallel zu dieser entlang der länglichen alternativen Befestigungsausnehmungen 20' verschoben werden kann. Mit der Schwenkachse 13 ist auch das Aufnahmenelement 12 verschiebbar. In Fig. 9 ist das Aufnahmeelement 12 in der alternativen ersten Ausnehmung 10' in einer Position aufgenommen, die eine einfache Aufnahme bzw. Entnahme des Datenspeichers 14 erlaubt. Das Aufnahmeelement 12 ist sowohl verschoben als auch verschwenkt.

Durch die bewegbare Verbindung von Aufnahmeelement 12 und Haltelement 9, 9' sind Position und/oder Orientierung des Aufnahmeelements 12 veränderbar. Dadurch wird je nach Position bzw. Orientierung ein Einstecken bzw. Ausstecken des Datenspeichers 14 erleichtert, bzw. ein Herausfallen des Datenspeichers 14 aus dem Aufnahmeelement 12 verhindert. Auch ist durch eine mögliche Positionierung bzw. Orientierung des Aufnahmeelements 12 und somit auch des Datenspeichers 14 zu erreichen, dass das erweiterte System aus dem erfindungsgemäßen System und dem aufgenommenen Datenspeicher 14 in das geschlossene CD-Gehäuse passen.

In den Figuren 11 und 12 sind jeweils ein alternatives Aufnahmeelement 12'' dargestellt an dessen von der Stecköffnung abgewandten Ende eine halbzylinderförmige Wölbung 22 aufweist, deren Zylinderachse 23 mit der Schwenkachse 13 zusammenfällt. In die Wölbung 22 sind entlang der Zylinderachse 23 seitlich koaxiale Bohrungen 24 ausgebildet, von denen nur eine dargestellt ist. In die Bohrungen 24 werden z. B. zylinderförmige lose Federn 26 oder andere elastische Elemente eingeführt, welche ebenfalls eingeführte zylinderförmige lose Befestigungselemente 25 mit zumindest einem halbkugelförmigen Ende abfedern. Bei einem Einstecken des in Fig. 12 dargestellten alternativen Aufnahmeelements 12" in ein Haltelement 9, 9' werden die losen Befestigungselemente 25 gegen die Kraft der losen Federn 26 in die Bohrungen gedrückt, das alternative Aufnahmeelement 12'' in eine geeignete Position und Orientierung in das Haltelement 9, 9' gebracht und losen Federn 26 entspannt. Dadurch werden die losen Befestigungselemente 25 in die Befestigungsausnehmungen 20, 20' gedrückt und das alternative Aufnahmeelement 12" mit dem Halteelement 9, 9' bewegbar verbunden.

Der Erfindungsgedanke umfasst auch weitere Ausführungsformen. Grundsätzlich zeichnet sich das erfindungsgemäße System unter anderem dadurch aus, dass das Halteelement und das Aufnahmeelement jeweils miteinander kompatible Geometrien aufweisen. Kompatibel bedeutet in diesem Kontext, dass es dadurch möglich ist, den Datenspeicher so aufzunehmen, dass auch das erweiterte System mit dem erfindungsgemäßen System und dem aufgenommenen Datenspeicher in ein CD- bzw. DVD-Gehäuse, ob nun offen oder zu passt. Dazu kann z.B. die erste Ausnehmung alle Formen annehmen, mit denen eine Aufnahme des Datenspeichers im oben genannten Sinne möglich ist. Die Form und die Größe des Datenspeichers können dabei ebenfalls variieren, solange dadurch oben genannte Bedingung nicht verletzt ist.

Anstelle nur einer ersten Ausnehmung können auch mehrere erste Ausnehmungen ausgebildet werden. Die ersten Ausnehmungen können dabei jeweils verschiebbar und/oder schwenkbar mit einem Aufnahmeelement verbunden werden. Dadurch können z. B. auch mehrere Datenspeicher aufgenommen werden. Die Schwenkachse eines Aufnahmeelements kann jede Orientierung aufnehmen, solange das Aufnahmeelement und der evtl. eingesteckte Datenspeicher dennoch in eine Position bzw. Orientierung gebracht werden können, welche oben genannte Bedingung nicht verletzt. Auch kann die Führung eines verschiebbaren Aufnahmeelements mittels Führungsausnehmungen (anstelle der alternativen Befestigungsausnehmungen 20') variabler Form realisierbar gemacht werden, solange das Aufnahmeelement dennoch in eine Position bzw. Orientierung gebracht werden kann, welche oben genannte Bedingung nicht verletzt.

An Stelle nur einer zweiten Ausnehmung können auch mehrere zweite Ausnehmungen z. B. seitlich gegenüberliegend mit einer ersten Ausnehmung verbunden werden. Auf diese Weise ist die Greifbarkeit eines eingesteckten Datenspeichers weiter erhöht. Die Tiefe einer ersten Ausnehmung oder einer zweiten Ausnehmung kann konstant oder aber auch variabel sein. Mittels Tiefenvariationen lassen sich Zusatzfunktionen, wie z.B. zu Fig. 6 erläutert, realisieren. Die dadurch realisierbaren mechanischen Effekte können sowohl technischen Wert als auch Unterhaltungswert aufweisen und erlauben künstlerische Freiheiten.

Vorzugsweise ist ein Aufnahmeelement aus dem Halteelement aussteckbar bzw. herausnehmbar und in das Halteelement wieder einsteckbar bzw. aufnehmbar. Dadurch können je nach Bedarf das Aufnahmeelement oder das Halteelement ausgetauscht werden, ohne das gesamte System austauschen zu müssen. Dazu kann das Material eines Aufnahmeelements und/oder eines Befestigungselements und/oder einer Befestigungsausnehmung und/oder eines Halteelements z.B. elastisch verformbar sein. Auf diese weise ist das Aufnahmeelement reversibel in das Halteelement einsteckbar bzw. aufnehmbar bzw. aus diesem wieder aussteckbar bzw. herausnehmbar. Besonders bevorzuge Materialien sind Kunststoffe. Alternativ können aber auch z.B. Metalle verwendet werden. Auch können die Befestigungsausnehmungen so ausgebildet sein, dass ohne Ein- bzw. Ausstecken eine Aufnahme bzw. Herausnahme möglich ist. Beispielsweise können die Befestigungsausnehmungen geometrisch so ausgebildet sein, dass eine Aufnahme bzw. Herausnahme eines Aufnahmeelements in das bzw. aus dem Halteelement nur nach bestimmten Bewegungsmustern des Aufnahmeelements möglich sind.

Befestigungselemente und Befestigungsausnehmungen können in ihrer Position ausgetauscht werden und in Bezug auf die dargestellten Ausführungsbeispiele umgekehrt auf Aufnahmeelement bzw. Haltelement verteilt sein und damit die kinetische Umkehr der bisher beschriebenen Beispiele bilden. Insbesondere können Bohrungen, Federn und alternative lose Befestigungselemente in einem Haltelement ausgebildet bzw. aufgenommen sein.

Die Positionen von Befestigungselementen und/oder Befestigungsausnehmungen auf einem, an einem bzw. in einem Aufnahmeelement bzw. Halteelement, welche zu einer bewegbaren Verbindung von Aufnahmeelement und Halteelement zusammenwirken, können auch variiert werden. Dadurch lassen sich verschiedene Schwenkachsen und Führungskurven für ein Halteelement realisieren. Solche Variationen können technischen und/oder kommerziellen Bedürfnissen angepasst werden.

Die Befestigungselemente und/oder Befestigungsausnehmungen können jeweils verschiedene Formen und Größen aufweisen und auf diese Weise insbesondere so ausgebildet sein, dass nur ausgewählte Bewegungen eines Aufnahmeelements in einem Halteelement ermöglicht sind. Dadurch können ungünstige Systemkonstellationen, d.h. relative Position und/oder Orientierung der Systemelemente, und somit z.B. auch ein unerwünschtes Herausspringen bzw. -fallen eines Datenspeichers vermieden werden. Auf diese Weise sind aber auch elegante und/oder technisch vorteilhafte Führungs- und/oder Schwenkbewegungen eines Aufnahmeelements, mit oder ohne eingestecktem Datenspeicher erzwingbar. Dadurch kann auch realisiert werden, dass eine Aufnahme bzw.

Herausnahme eines Aufnahmeelements in das bzw. aus dem Halteelement nur nach einem bestimmten Bewegungsmuster des Aufnahmeelements möglich ist.

Bevorzugt sind das Aufnahmeelement als Kappe zur Aufnahme eines USB-Sticks ausgebildet und der steckbare Datenspeicher ein USB-Stick.

Die Erfindung ist nicht auf die dargestellten Ausführungsbeispiele beschränkt. Vielmehr sind auch einzelne Merkmale der Ausführungsbeispiele vorteilhaft miteinander kombinierbar.

## Patentansprüche

1. System zur Aufnahme zumindest eines steckbaren Datenspeichers (14) mit zumindest einem Steckelement (15), mit:
- zumindest einem Aufnahmeelement (12) zur Aufnahme des Steckelements (15), wobei über dieses Steckelement Daten zu und/oder von dem Datenspeicher (14) übertragbar sind,
- zumindest einem Haltelement (9, 9') zur Halterung des Aufnahmeelements (12),
wobei das System in ein CD- bzw. DVD-Gehäuse (1) aufnehmbar und dort fixierbar ist.

2. System nach Anspruch 1,
**dadurch gekennzeichnet, dass**
- das Aufnahmeelement (12) und das Haltelement (9, 9') bewegbar miteinander verbunden sind.

3. System nach Anspruch 2,
**dadurch gekennzeichnet,**
**dass** das Halteelement (9, 9') zumindest eine erste Ausnehmung (10, 10') aufweist, welche eine Aufnahme des Datenspeichers (14) in der Ebene des Halteelements (9, 9') erlaubt.

4. System nach Anspruch 3,
**dadurch gekennzeichnet,**
**dass** das Halteelement (9, 9') zumindest eine zweite Ausnehmung (11), welche mit der ersten Ausnehmung (10, 10') verbunden ist, aufweist, welche ein Eingreifen des Datenspeichers (14) erlaubt.

5. System nach einem der Ansprüche 1 bis 4,
**dadurch gekennzeichnet,**
**dass** das Aufnahmeelement (12) in dem Halteelement (9, 9') verschiebbar gelagert ist.

6. System nach einem der Ansprüche 1 bis 5,
**dadurch gekennzeichnet,**
**dass** das Aufnahmeelement (12) in dem Halteelement (9, 9') drehbar und/oder schwenkbar gelagert ist.

7. System nach einem der Ansprüche 1 bis 6,
**dadurch gekennzeichnet,**
**dass** das Aufnahmeelement (12) aus dem Halteelement (9, 9') aussteckbar bzw. herausnehmbar und in das Halteelement (9, 9') wieder einsteckbar bzw. aufnehmbar ist.

8. System nach einem der Ansprüche 1 bis 7,
**dadurch gekennzeichnet,**
**dass** das Aufnahmeelement (12) als Kappe zur Aufnahme eines USB-Sticks (14) ausgebildet ist.
